# EUROPÄISCHE PATENTANMELDUNG

(11) **EP 0 842 835 A1**
(43) Veröffentlichungstag der Anmeldung: **20.05.1998**
(21) Anmeldenummer: 97119546.6
(22) Anmeldetag: 07.11.1997
(51) Int. Cl.: B60S 3/06

(54) **Bürstenwascheinrichtung**

(30) Priorität: 15.11.1996 DE 19647255
(71) Anmelder: Alfred Kärcher GmbH & Co., 71364 Winnenden (DE)
(72) Erfinder: Asch, Markus, 72119 Ammerbuch (DE); Kohlert, Rainer, 71522 Backnang (DE)
(74) Vertreter: Hoeger, Stellrecht & Partner

(57) **Zusammenfassung**

Um eine Bürstenwascheinrichtung für Kraftfahrzeuge (60) mit einem ortsfesten Gestell mit einem um eine vertikale Achse drehbar gelagerten Schwenkarm (35), an dem um eine vertikale Achse drehbar eine Waschbürste (39) gehalten ist, und mit einem Federelement (54) zum Andrücken der Waschbürste (39) an ein an dem Gestell längs einer Fahrbahn vorbeifahrendes Kraftfahrzeug (60) derart weiterzubilden, daß sichergestellt wird, daß die Waschbürste (39) zuverlässig der Kontur des zu reinigenden Fahrzeugs (60) folgt, ohne dieses zu beschädigen, wird erfindungsgemäß vorgeschlagen, daß die Bürstenwascheinrichtung eine die Andruckkraft des Federelements (54) regelnde Regeleinheit umfaßt. Außerdem wird eine Fahrzeugwaschanlage mit mindestens einem Paar derartiger Bürstenwascheinrichtungen vorgeschlagen.

## Beschreibung

Die Erfindung betrifft eine Bürstenwascheinrichtung für Kraftfahrzeuge mit einem ortsfesten Gestell mit einem um eine vertikale Achse drehbar gelagerten Schwenkbalken, an dem um eine vertikale Achse drehbar eine Waschbürste gehalten ist, und mit einem Federelement zum Andrücken der Waschbürste an ein an dem Gestell längs einer Fahrbahn vorbeifahrendes Kraftfahrzeug.

Aus der US-amerikanischen Patentschrift US-PS 3,750,212 ist eine stationäre Bürstenwaschanlage bekannt, wobei das Kraftfahrzeug im Durchfahrtbetrieb gereinigt werden kann. Hierzu kommen Waschbürsten zum Einsatz, die Jeweils am freien Ende eines um eine senkrechte Achse schwenkbaren, horizontalen Arms gelagert sind, der federnd in Richtung des Kraftfahrzeugs gedrückt wird. Beim Vorfahren schwenkt das Kraftfahrzeug eine in die Fahrbahn hineinragende Waschbürste nach außen, so daß zunächst die Frontseite gereinigt wird, bis die Waschbürste an einer ersten äußeren Seitenfläche anliegt, so daß daraufhin diese Seitenfläche der Reinigung unterzogen wird. Um auch die Heckfläche des Kraftfahrzeugs zu reinigen, kommt eine weitere Waschbürste zum Einsatz, die zunächst an der zweiten Seitenfläche des Kraftfahrzeugs anliegt bis das Kraftfahrzeugheck die Höhe der Waschbürste erreicht. Beim weiteren Vorfahren schwenkt die Waschbürste in die Fahrbahn hinein und reinigt dabei die Heckfläche des Fahrzeugs. Mittels einer derartigen Bürstenwaschanlage läßt sich allerdings nicht in allen Fällen ein zufriedenstellendes Reinigungsergebnis erzielen. Es hat sich herausgestellt, daß bei höherer Durchfahrtgeschwindigkeit des Kraftfahrzeugs die Waschbürsten nicht kontinuierlich der Kontur des Fahrzeugs folgen, so daß eine ungleichmäßige Reinigung erzielt wird. Dies gilt insbesondere für die Reinigung der Heckfläche.

Um ein besseres Reinigungsergebnis zu erzielen, wurde vorgeschlagen die Andruckkraft der Waschbürsten zu erhöhen. Dies führt allerdings in vielen Fällen zu einer Beschädigung des Kraftfahrzeugs. Zur Lösung dieses Problems wird in der US-PS 3,704,476 eine Kraftbegrenzung vorgeschlagen, indem eine die Waschbürste gegen das Fahrzeug drückende Feder an einem Gegengewicht gehalten wird. Dies hat zwar eine Begrenzung der Federkraft zur Folge, so daß die Andruckkraft einen Maximalwert nicht überschreiten kann. Die Einstellung des Maximalwerts der Andruckkraft hat sich aber als schwierig erwiesen. Insbesondere dann, wenn es während des Betriebs der Bürstenwaschanlage zu einer Fehlausrichtung der Waschbürste kommt, ist nicht auszuschließen, daß die mittels der am Gegengewicht gehaltenen Feder erzielbare maximale Andruckkraft nicht mehr dem Wert entspricht, der für eine einwandfreie Reinigung des Fahrzeugs erforderlich ist.

In der US-PS 4,445,246 wird deshalb vorgeschlagen, die Feder zum Andrücken der Waschbürste an das Kraftfahrzeug mit Hilfe eines verschwenkbaren Schwenkhebels am Schwenkarm zu befestigen. Dadurch kann die maximal erzielbare Andruckkraft der Feder manuell verstellt werden, so daß beispielsweise die Fehlausrichtung der Waschbürsten korrigiert werden kann. Bei einer derartigen Ausgestaltung der Bürstenwascheinrichtung ist allerdings die Andruckkraft der Waschbürste auf einen vorgegebenen Wert beschränkt, der während des Reinigungsvorgangs nicht beeinflußt werden kann. Wurde dieser Wert zu Beginn des Reinigungsvorgangs zu groß gewählt, so hat dies zur Folge, daß das zu reinigende Kraftfahrzeug beschädigt werden kann. Soll dies vermieden werden, so muß bei der bekannten Bürstenwascheinrichtung die maximal zulässige Andruckkraft vor dem Reinigungsvorgang manuell reduziert werden. Dies hat wiederum zur Folge, daß insbesondere bei höherer Durchfahrtgeschwindigkeit des Fahrzeugs nicht in allen Fällen gewährleistet ist, daß die Waschbürste kontinuierlich der Kontur des Fahrzeugs nachgeführt wird.

Aufgabe der vorliegenden Erfindung ist es, eine Bürstenwascheinrichtung der gattungsgemäßen Art derart weiterzubilden, daß sichergestellt wird, daß die Waschbürste zuverlässig der Kontur des zu reinigenden Fahrzeugs folgt, ohne dieses zu beschädigen.

Diese Aufgabe wird bei einer Bürstenwascheinrichtung der eingangs genannten Art erfindungsgemäß dadurch gelöst, daß die Bürstenwascheinrichtung eine die Andruckkraft des Federelements regelnde Regeleinheit umfaßt. Eine derartige Konstruktion hat den Vorteil, daß die Andruckkraft während des Reinigungsvorgangs regelbar ist. Dies ermöglicht eine Ausgestaltung, bei der die Waschbürste ständig mit einer im wesentlichen gleichbleibenden Andruckkraft gegen das zu reinigende Kraftfahrzeug gedrückt wird. Erreicht die Waschbürste vorstehende Bereiche des Kraftfahrzeugs, beispielsweise Außenspiegel, so wird durch die Regelung erreicht, daß die Waschbürste nur so weit den vorstehenden Bereichen ausweicht, daß noch eine gleichbleibende Andruckkraft ausgeübt wird. Ein Ablösen von der Außenkontur des Kraftfahrzeugs wird somit vermieden. Andererseits wird durch die Regelung erreicht, daß die Waschbürste so weit zurückweicht, daß die vorstehenden Bereiche nicht beschädigt werden.

Bei einer bevorzugten Ausführungsform ist vorgesehen, daß die Regeleinheit ein mittels eines Führungsantriebes relativ zur Waschbürste bewegbares Führungsteil umfaßt, an dem das Federelement gehalten ist, das die Waschbürste mit einer Federkraft beaufschlagt. Das die Waschbürste gegen das Fahrzeug drückende Federelement ist am bewegbaren Führungsteil gehalten, so daß über das Führungsteil die vom Federelement auf die Waschbürste ausgeübte Federkraft beeinflußt werden kann. Hierzu kann das Führungsteil mittels des Führungsantriebs bewegt werden. Das Führungsteil bildet somit eine Abstützung für das Federelement, und die Abstützung kann mittels des Führungsantriebs so relativ zur Waschbürste bewegt werden, daß vom Federelement eine gleichbleibende Federkraft auf die Waschbürste ausgeübt wird. Dies hat zur Folge, daß die Waschbürste zwar federnd am Kraftfahrzeug anliegt, die Jeweils wirksame Federkraft jedoch in engen Grenzen gehalten werden kann. Hierzu ist es günstig, den das Führungsteil bewegenden Führungsantrieb in Abhängigkeit von der vom Federelement auf die Waschbürste ausgeübten Federkraft anzusteuern.

Von Vorteil ist es, wenn das Führungsteil eine um eine vertikale Achse schwenkbar am Gestell angeordnete Federhalterung umfaßt. Durch Verschwenken der Federhalterung kann die Orientierung des an der Federhalterung festgelegten Federelements relativ zur Waschbürste so beeinflußt werden, daß vom Federelement eine gleichbleibende Federkraft auf die Waschbürste ausgeübt wird. So kann beispielsweise vorgesehen sein, daß die Federhalterung drehfest an einer vertikalen, dem Führungsantrieb zugeordneten Antriebswelle gehalten ist. Weicht die vom Federelement auf die Waschbürste ausgeübte Federkraft um einen vorgebbaren Betrag von einem Sollwert ab, so kann der Führungsantrieb aktiviert und dadurch die Antriebswelle in Drehung versetzt werden. Dies hat eine Schwenkbewegung der Federhalterung zur Folge, an der sich das Federelement abstützt. Somit kann durch Drehung der Antriebswelle auf einfache Weise die vom Federelement ausgeübte Federkraft geregelt werden.

Als Maß für die vom Federelement auf die Waschbürste ausgeübte Federkraft kann die Länge des Federweges des Federelements erfaßt werden. Je größer der zurückgelegte Federweg, desto größer ist die vom Federelement ausgeübte Federkraft. Es kann deshalb vorgesehen sein, daß der Führungsantrieb in Abhängigkeit von der Länge des Federwegs des Federelements aktivierbar ist.

Günstig ist, wenn der Federweg des Federelements durch einen Näherungsschalter begrenzt ist. Dies ermöglicht in konstruktiv einfacher Weise eine Ausgestaltung, bei der der Führungsantrieb eingeschaltet wird, sobald der Federweg des Federelements so groß ist, daß der Näherungsschalter betätigt wird, und bei der der Führungsantrieb wieder ausgeschaltet wird, wenn sich der Federweg des Federelements wieder so weit reduziert, daß der Näherungsschalter freigegeben wird. Da der Federweg ein Maß für die vom Federelement auf die Waschbürste ausgeübte Federkraft darstellt, kann durch Aktivieren des Führungsantriebs das Führungsteil derart bewegt werden, daß das Federelement entlastet wird, wenn die Länge des Federwegs einen vorbestimmten Wert, der durch die Lage des Näherungsschalters bestimmt wird, erreicht.

Alternativ oder ergänzend zur Ansteuerung des Führungsantriebs in Abhängigkeit vom Federweg des Federelements ist bei einer weiteren vorteilhaften Ausführungsform vorgesehen, daß der Führungsantrieb in Abhängigkeit vom Wert der Leistungsaufnahme eines die Waschbürste antreibenden Antriebsmotors aktivierbar ist. Wird die Waschbürste mit einer hohen Andruckkraft gegen das zu reinigende Fahrzeug gedrückt, so hat dies eine verstärkte Leistungsaufnahme des Antriebsmotors der Waschbürste zur Folge. Diese Leistungsaufnahme kann mittels einer üblichen Leistungsüberwachung festgestellt werden. Überschreitet die Leistungsaufnahme des Antriebsmotors einen vorgegebenen Sollwert, so wird der Führungsantrieb aktiviert und dadurch das Führungsteil zur Entlastung des Federelements in Bewegung versetzt. Dies hat zur Folge, daß sich die vom Federelement auf die Waschbürste ausgeübte Federkraft und damit auch die Andruckkraft der Waschbürste auf das zu reinigende Fahrzeug verringern, so daß vom Antriebsmotor der Waschbürste nur noch eine geringere Leistungsaufnahme erforderlich ist, um die Waschbürste in Rotation zu versetzen. Die abnehmende Leistungsaufnahme des Antriebsmotors wiederum führt dazu, daß der Führungsantrieb ausgeschaltet wird. Auf diese Weise wird sichergestellt, daß von der Waschbürste eine gleichmäßige Andruckkraft auf das zu reinigende Fahrzeug ausgeübt wird.

Der Führungsantrieb kann beispielsweise einen Stellmotor umfassen. So kann vorgesehen sein, daß ein Elektromotor oder ein hydraulisch oder pneumatisch angetriebener Motor zum Einsatz kommt.

Statt eines Stellmotors kommt bei einer weiteren vorteilhaften Ausführungsform für den Führungsantrieb ein hydraulisches oder pneumatisches Kolben-Zylinder-Aggregat zum Einsatz.

Das Federelement kann grundsätzlich derart ausgestaltet sein, daß es unmittelbar auf die Waschbürste einwirkt. In vielen Fällen ist es jedoch konstruktiv von Vorteil, wenn das Federelement den Schwenkarm mit einer Federkraft beaufschlagt, die dann vom Schwenkarm auf die Waschbürste übertragen wird.

Bei einer besonders bevorzugten Ausführungsform ist vorgesehen, daß das Federelement zwischen einem starr mit dem Schwenkarm verbundenen Schwenkausleger und dem Führungsteil angeordnet ist. Dies ermöglicht eine Ausgestaltung, bei der der Schwenkarm nicht an die Erfordernisse des Federelements angepaßt werden muß, so daß die Ausbildung des Schwenkarms durch das Vorhandensein des Federelements nicht beeinflußt wird. Statt dessen ist der Schwenkarm starr mit einem Schwenkausleger verbunden, an dem das Federelement angreift. Die von letzterem ausgeübte Federkraft wird somit über den Schwenkausleger und den Schwenkarm auf die Waschbürste übertragen.

Mittels der erfindungsgemäßen Bürstenwascheinrichtung kann beispielsweise eine Frontfläche sowie eine Seitenfläche eines Fahrzeugs gereinigt werden. Hierzu wird die Waschbürste vor dem zu reinigenden Fahrzeug positioniert, und beim Vorfahren schwenkt das Fahrzeug die drehbar am Schwenkarm gehaltene Waschbürste nach außen, bis sie an der Seitenfläche des Fahrzeugs anliegt. Um eine zuverlässige Reinigung sowohl der Frontfläche als auch der Heckfläche und beider Seitenflächen des Fahrzeugs zu gewährleisten, kommt vorzugsweise eine Fahrzeugwaschanlage mit mindestens einem Paar Bürstenwascheinrichtungen der voranstehend beschriebenen Art zum Einsatz, wobei einer an einer Fahrbahnseite angeordneten ersten Bürstenwascheinrichtung, deren Waschbürste aus einer Frontposition mit im wesentlichen quer zur Fahrbahn ausgerichtetem Schwenkarm in eine Seitenposition mit im wesentlichen Parallel zur Fahrbahn ausgerichtetem Schwenkarm verschwenkbar ist, eine an der gegenüberliegenden Fahrbahnseite angeordnete zweite Bürstenwascheinrichtung zugeordnet ist, deren Waschbürste aus einer Seitenposition mit im wesentlichen parallel zur Fahrbahn ausgerichtetem Schwenkarm in eine Heckposition mit im wesentlichen quer zur Fahrbahn ausgerichtetem Schwenkarm verschwenkbar ist. Bei einer derartigen Ausgestaltung wird die Waschbürste der ersten Bürstenwascheinrichtung beim Vorfahren des zu reingenden Kraftfahrzeugs aus ihrer Frontposition in ihre Seitenposition verschwenkt, so daß die Frontseite und eine Längsseite des Kraftfahrzeugs gereinigt werden. Gleichzeitig liegt die Waschbürste der zweiten Bürstenwascheinrichtung zunächst an der anderen Längsseite des Kraftfahrzeugs an und schwenkt dann, wenn das Fahrzeugheck die Waschbürste erreicht hat, beim weiteren Vorfahren in ihre Heckposition. Somit wird durch die zweite Wascheinrichtung sichergestellt, daß die zweite Längsseite des Kraftfahrzeugs ebenso gereinigt wird wie die Heckfläche.

Zur Reinigung der Front- und Heckflächen sowie der Längsseiten des Kraftfahrzeugs ist der Einsatz von mindestens zwei Bürstenwascheinrichtungen erforderlich. Dies ermöglicht die Ausgestaltung einer Fahrzeugwaschanlage, bei der Front- und Heckfläche sowie die Seitenflächen des Fahrzeugs Jeweils einmal gereinigt werden. Um eine vollständige Reinigung der Frontfläche und der Heckfläche sicherzustellen, ist es hierbei erforderlich, daß die Schwenkarme der Bürstenwascheinrichtungen jeweils die gesamte Fahrbahnbreite übergreifen.

Bei einer besonders bevorzugten Fahrzeugwaschanlage ist vorgesehen, daß in Fahrtrichtung hintereinander zwei spiegelbildlich ausgebildete Paare von Bürstenwascheinrichtungen angeordnet sind, deren Schwenkarme jeweils mindestens bis zur Fahrzeugmitte reichen. Sofern die Schwenkarme jeweils die gesamte Fahrbahn übergreifen, ermöglicht eine derartige Ausgestaltung die doppelte Reinigung der Front- und Heckflächen sowie der Längsseiten des Fahrzeugs.

Statt dessen kann allerdings auch vorgesehen sein, daß die Schwenkarme jeweils nur so weit über die Mitte der Fahrbahn hinaus reichen, so daß sich die Frontpositionen der ersten Bürstenwascheinrichtungen und die Heckpositionen der zweiten Bürstenwascheinrichtungen der spiegelbildlich ausgebildeten Paare jeweils gerade überlappen. Dies führt dazu, daß Front- und Heckflächen nur einfach gereinigt werden, während die Längsseiten des Kraftfahrzeugs eine doppelte Reinigung erfahren.

Die nachfolgende Beschreibung einer bevorzugten Ausführungsform der Erfindung dient im Zusammenhang mit der Zeichnung der näheren Erläuterung:

Es zeigen:
- Figur 1:: eine schematische Draufsicht auf eine Fahrzeugwaschanlage;
- Figur 2:: eine schematische Seitenansicht auf eine Bürstenwascheinrichtung der Fahrzeugwaschanlage in Richtung des Pfeiles A aus Figur 1;
- Figur 3:: eine vergrößerte Darstellung des Ausschnitts X aus Figur 2;
- Figur 4:: eine schematische Draufsicht auf die Bürstenwascheinrichtung aus Figur 2 beim Verschwenken aus einer Frontposition;
- Figur 5:: eine schematische Draufsicht entsprechend Figur 4 beim Erreichen einer Seitenpostion;
- Figur 6:: eine schematische Draufsicht auf eine Bürstenwascheinrichtung entsprechend Figur 2 in einer Seitenposition und
- Figur 7:: eine schematische Draufsicht auf die Bürstenwascheinrichtung aus Figur 6 beim Erreichen einer Heckposition.

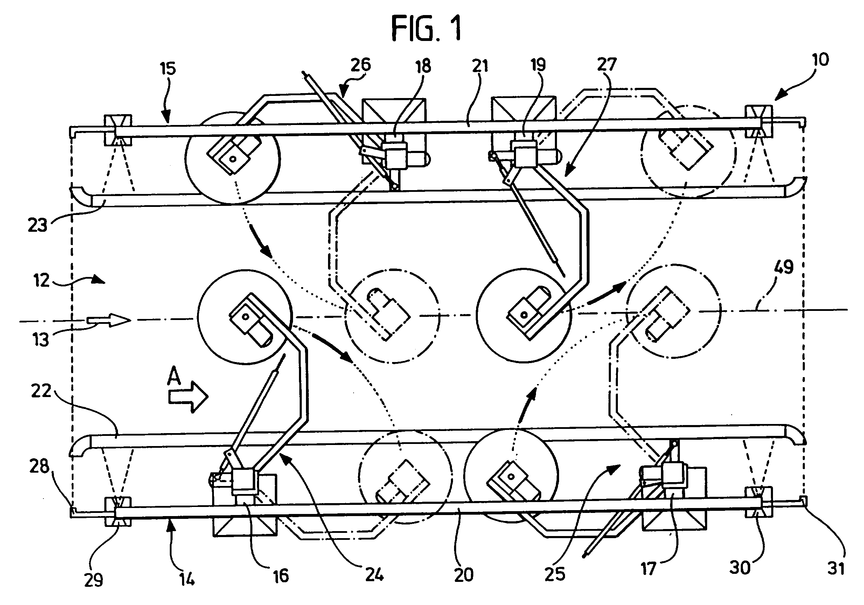

In Figur 1 ist ein insgesamt mit dem Bezugszeichen 10 versehene Fahrzeugwaschanlage dargestellt mit zwei einander gegenüberliegenden, längs einer Fahrbahn 12 verlaufenden Gestellen 14, 15, die jeweils zwei senkrechte Stützen 16, 17 bzw. 18, 19 umfassen, die über Längsträger 20 bzw. 21 jeweils miteinander verbunden sind. Den Stützen 14, 15 ist Jeweils eine parallel zum jeweiligen Längsträger 20 bzw. 21 verlaufende Leitschiene 22 bzw. 23 zugeordnet, die unmittelbar auf der Fahrbahn 12 verlaufen und diese seitlich begrenzen. Jeder Stütze 16, 17, 18 und 19 ist eine Bürstenwascheinrichtung 24, 25, 26, 27 zugeordnet, wobei jeweils zwei in Fahrtrichtung 13 geringfügig versetzt zueinander angeordnete, einander im wesentlichen gegenüberstehende Bürstenwascheinrichtungen 24, 26 bzw. 25, 27 ein Waschbürstenpaar bilden, mit dessen Hilfe, wie nachfolgend beschrieben, jeweils die beiden Längsseiten sowie Front- und Heckfläche eines Fahrzeugs gereinigt werden können.

Im Bereich der Einfahrt in die Fahrzeugwaschanlage 10 ist an den vorderen Enden der Gestelle 14 und 15 eine vordere Lichtschranke 28 sowie ein Vorsprühbogen 29 angeordnet. Eine entsprechende Ausgestaltung befindet sich an der Ausfahrt der Fahrzeugwaschanlage 10 in Form eines an den hinteren Enden der Gestelle 14, 15 positionierten Nachspülbogens 30 und einer hinteren Lichtschranke 31.

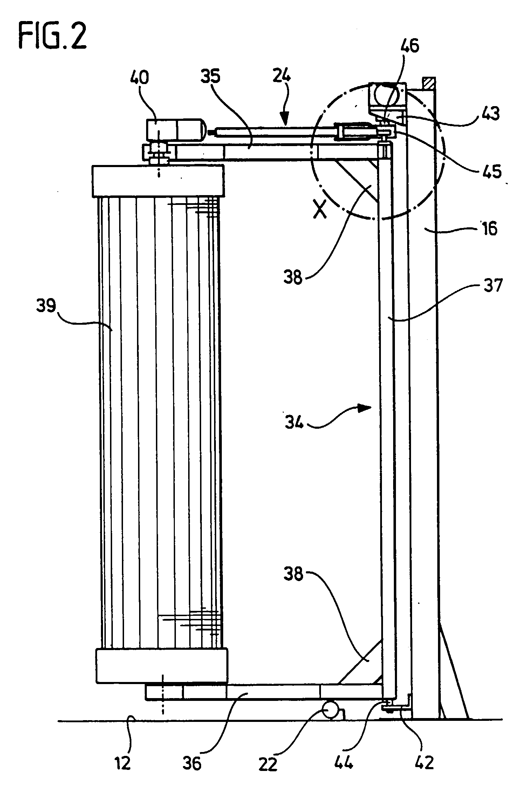

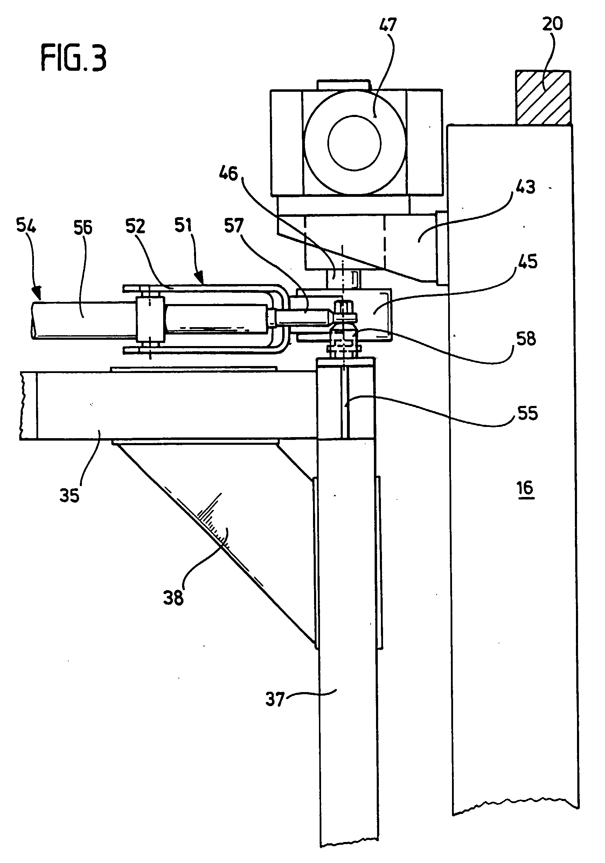

Die Bürstenwascheinrichtungen 24 bis 27 sind im wesentlichen identisch aufgebaut, daher wird nachfolgend unter Bezugnahme auf die Figuren 2 und 3 nur die Bürstenwascheinrichtung 24 näher beschrieben.

Die in Figur 2 dargestellte Bürstenwascheinrichtung 24 umfaßt einen um eine vertikale Achse drehbar an der Stütze 16 gehaltenen Schwenkrahmen 34 mit einem oberen und einem unteren Schwenkarm 35 bzw. 36, die senkrecht vom oberen bzw. unteren Ende einer vertikal ausgerichteten Schwenkstrebe 37 abstehen, wobei die Schwenkarme 35 und 36 zur Erhöhung ihrer mechanischen Stabilität zusätzlich über schräg zur Längsachse der Schwenkstrebe 37 verlaufende Winkelstücke 38 mit der Schwenkstrebe 37 starr verbunden sind. Die Bürstenwascheinrichtung 24 umfaßt außerdem eine um eine senkrechte Drehachse drehbare, zylindrische Waschbürste 39, die an den freien Enden des oberen und des unteren Schwenkarms 35 bzw. 36 drehbar gelagert ist, wobei am freien Ende des oberen Schwenkarms 35 zusätzlich ein Antriebsmotor 40 gehalten ist zur Drehung der Waschbürste 39 um ihre senkrechte Drehachse.

Die Lagerung des Schwenkrahmens 34 an der Stütze 16 erfolgt mittels einer der Fahrbahn 12 benachbarten unteren Aufhängung 42 und einer am gegenüberliegenden Ende der Stütze 16 angeordneten oberen Aufhängung 43, die jeweils quer zur Längsachse der Stütze 16 ausgerichtet und starr mit dieser verbunden sind. Die Verbindung zwischen dem Schwenkrahmen 34 und der unteren Aufhängung 42 erfolgt mittels eines stirnseitig aus der Schwenkstrebe 37 vorstehenden Lagerzapfens 44, der in eine entsprechende Aufnahme der unteren Aufhängung 42 eingreift. An ihrer gegenüberliegenden, der Fahrbahn 12 abgewandten Stirnseite trägt die Schwenkstrebe 37 ebenfalls einen Lagerzapfen, dieser greift jedoch nicht unmittelbar in eine entsprechende Aufnahme der oberen Aufhängung 43 ein, sondern ist frei drehbar in einem zwischen der Schwenkstrebe 37 und der oberen Aufhängung 43 angeordneten Flanschlager 45 gehalten, das seinerseits über eine koaxial zur Längsachse der Schwenkstrebe 37 verlaufende Antriebswelle 46 eines auf der oberen Aufhängung 43 aufsitzenden Stellmotors 47 an der oberen Aufhängung 43 gehalten ist. Dies wird insbesondere aus Figur 3 deutlich. Der gesamte Schwenkrahmen 34 und mit diesem die Waschbürste 39 und deren Antriebsmotor 40 sind gegenüber der Antriebswelle 46 des Stellmotors 47 drehbar und können dadurch verschwenkt werden, daß ein zu reinigendes Kraftfahrzeug beim Durchfahren durch die Fahrzeugwaschanlage 10 die zu Beginn der Fahrzeugreinigung in der Fahrbahnmitte 49 positionierte Waschbürste 39 zur Seite schwenkt.

Der Stellmotor 47 dient zum Verschwenken einer quer zur Antriebswelle 46 ausgerichteten, am Flanschlager 45 drehbar gehaltenen Federhalterung 51, deren dem Flanschlager 45 abgewandtes, freies Ende in Form eines U-förmigen Bügels 52 ausgestaltet ist und die durch Aktivierung des Stellmotors 47 um die durch die Antriebswelle 46 definierte Drehachse in einer horizontalen Ebene verschwenkbar ist. Das freie Ende der Federhalterung 51 ist über eine Druckfeder 54 mit einem Schwenkausleger 55 gekoppelt, der starr mit dem Schwenkarm 35 verbunden ist und horizontal vom oberen Ende der Schwenkstrebe 37 absteht. Hierzu ist ein Federgehäuse 56 um eine vertikale Achse drehbar an den freien Enden der Schenkel des U-förmigen Bügels des Federhalters 51 gehalten, und ein stirnseitig aus dem rohrförmigen, horizontal ausgerichteten Federgehäuse 56 herausragender Federzapfen 57 ist über ein Gelenk 58 ebenfalls um eine vertikale Achse drehbar mit dem freien Ende des Schwenkauslegers 55 verbunden.

Die Kopplung der Federhalterung 51 mit dem Schwenkausleger 55 über die Druckfeder 54 hat zur Folge, daß der Schwenkrahmen 34 durch Aktivierung des Stellmotors 47 verschwenkt werden kann, da die vom Stellmotor 47 erzeugte Drehbewegung über die Antriebswelle 46 und das Flanschlager 45 so auf die Federhalterung 51 übertragen werden kann, daß diese um die durch die Antriebswelle 46 definerte Drehachse in Richtung auf den Schwenkausleger 55 verschwenkt wird, so daß die Druckfeder 54 belastet wird und auf den Schwenkausleger 55 eine derartige Federkraft ausübt, daß dadurch der mit diesem starr verbundene Schwenkrahmen 34 um seine vertikale Drehachse verdreht wird. Wird umgekehrt durch Vorfahren eines Kraftfahrzeugs die Waschbürste 39 zur Seite geschwenkt, so wird dadurch der Schwenkausleger 55 in Richtung auf das freie Ende der Federhalterung 51 verschwenkt und somit die Druckfeder 54 belastet. Diese Belastung kann dadurch reduziert werden, daß die Federhalterung 51 mittels des Stellmotors 47 in die dem Schwenkausleger 55 abgewandte Richtung verdreht wird. Auf diese Weise kann sichergestellt werden, daß durch geeignete Aktivierung des Stellmotors 47 die von der Druckfeder 54 aus den Schwenkausleger 55 und den Schwenkrahmen 34 ausgeübte Federkraft weder einen vorbestimmten Maximalwert überschreitet noch einen vorgegebenen Minimalwert unterschreitet. Bei Überschreiten des Maximalwerts wird die Federhalterung 51 durch Aktivierung des Stellmotors 47 in die dem Schwenkausleger 55 abgewandte Richtung verschwenkt, so daß die Druckfeder 54 entspannt wird, und bei Unterschreiten des vorgegebenen Minimalwerts wird die Federhalterung 51 in Richtung auf den Schwenkausleger 55 verschwenkt, so daß die Belastung der Druckfeder 54 erhöht wird.

Die Belastung und Entlastung der Druckfeder 54 mittels des Stellmotors 47 kann beispielsweise in Abhängigkeit des von der Druckfeder 54 zurückgelegten Federwegs erfolgen. Bei der in der Zeichnung dargestellten Ausführungsform ist allerdings vorgesehen, daß als Maß für die von der Druckfeder 54 auf den Schwenkausleger 55 und den Schwenkrahmen 34 ausgeübte Federkraft die Leistungsaufnahme des Antriebsmotors 40 der Waschbürste 39 ermittelt wird. Die Leistungsaufnahme ist um so größer, je stärker die Kraft ist, mit der die Waschbürste 39 auf das zu reinigende Fahrzeug drückt. Diese Andruckkraft wird wiederum durch die von der Druckfeder 54 über den Schwenkausleger 55 auf den Schwenkrahmen 34 ausgeübte Federkraft bestimmt.

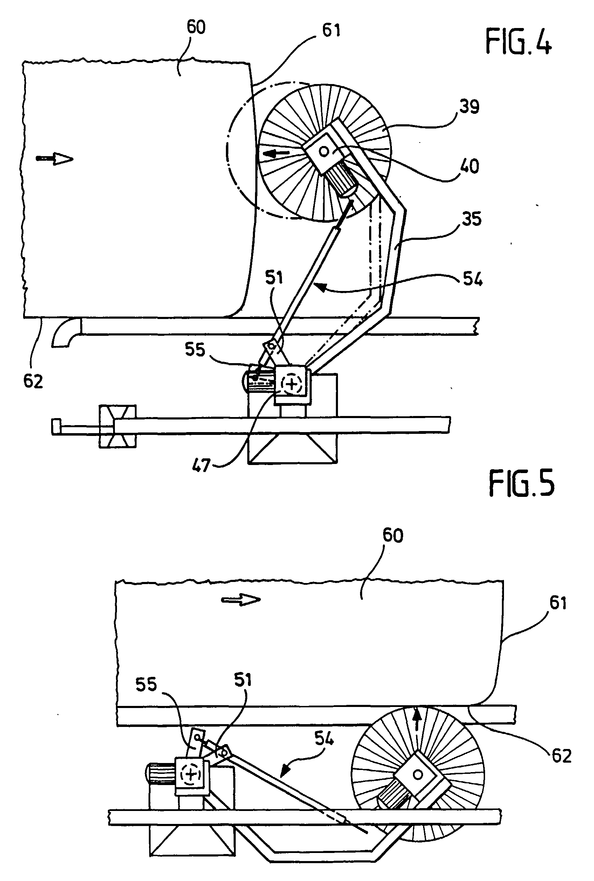

Ein zu reinigendes Fahrzeug ist schematisch in den Figuren 4 bis 7 mit dem Bezugszeichen 60 belegt. Fährt das Fahrzeug 60 in die Fahrzeugwaschanlage 10 ein, so werden mit Hilfe der vorderen Lichtschranke 28 (Figur 1) der Antriebsmotor 40 der Waschbürste 39 sowie der Stellmotor 47 aktiviert. Dies hat zur Folge, daß zum einen die Waschbürste 39 in Rotation versetzt wird und daß zum anderen der Schwenkrahmen 34 der Bürstenwascheinrichtung 24 in die in Figur 1 mit durchgezogenen Linien dargestellte, fahrbahnmittige Frontposition einschwenkt. Nach Erreichen der Frontposition wird der Stellmotor 47 ausgeschaltet, während der Antriebsmotor 40 zur Drehung der Waschbürste 39 aktiviert bleibt. Nach Erreichen der Frontposition ist die Druckfeder 54 entspannt. Trifft das langsam vorfahrende Fahrzeug 60 mit einer Frontfläche 61 auf die Waschbürste 39, so wird diese in Fahrtrichtung 13 weggedrückt und damit der mit dem Schwenkarm 35 starr verbundene Schwenkausleger 55 in Richtung auf die Federhalterung 51 verschwenkt, so daß die Druckfeder 54 belastet wird. Durch das Zusammendrücken der Druckfeder 54 wird eine definierte Kraft aufgebaut, die vom Schwenkausleger 55 und dem Schwenkarm 35 auf die Waschbürste 39 übertragen wird, so daß die Waschbürste 39 mit einer definierten Andruckkraft gegen die Frontfläche 61 des Fahrzeugs 60 drückt. Beim weiteren Vorfahren des Fahrzeugs 60 wird die Druckfeder 54 zunehmend belastet, so daß sich die Andruckkraft kontinuierlich erhöht. Dies hat eine verstärkte Leistungsaufnahme des Antriebsmotors 40 der Waschbürste 39 zur Folge. Die Leistung des Antriebsmotors 40 wird von einer in der Zeichnung nicht dargestellten, an sich bekannten Leistungsüberwachungsschaltung überwacht, die bei Überschreiten einer vorgebbaren Maximalleistungsaufnahme den Stellmotor 47 aktiviert, der dann die Federhalterung 51 in die dem Schwenkausleger 55 abgewandte Richtung verschwenkt, so daß die Druckfeder 54 entlastet und damit die von der Waschbürste 39 ausgeübte Andruckkraft reduziert wird.

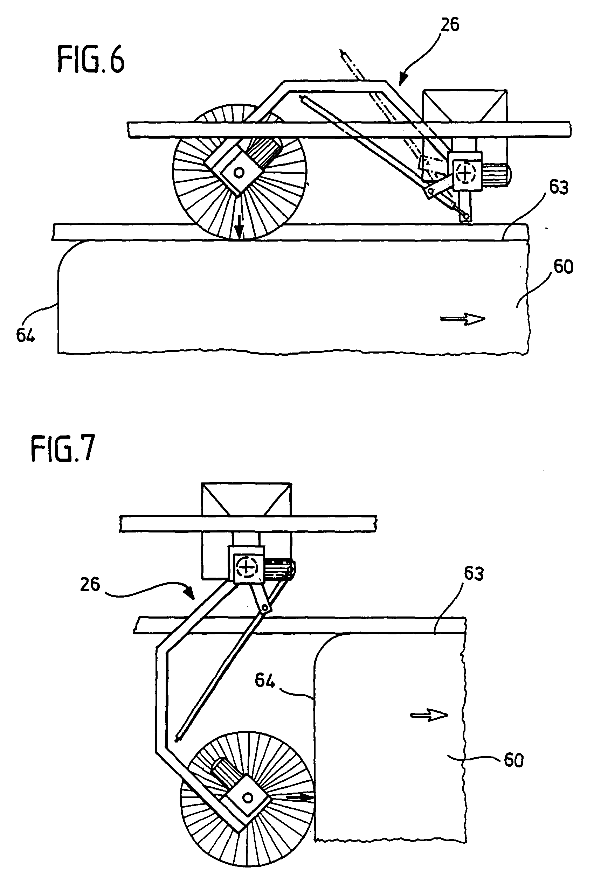

Da sich das Fahrzeug 60 in ständiger Vorwärtsbewegung befindet, wird die Waschbürste 39 nach außen gedrückt bis sie - wie in Figur 5 dargestellt - eine äußere Seitenfläche 62 des Fahrzeugs 60 erreicht. Hierbei wird durch die in Abhängigkeit von der Leistungsaufnahme des Antriebsmotors 40 der Waschbürste 39 erfolgende Aktivierung des Stellmotors 47 und der damit verbundenen Nachführung der Druckfeder 54 sichergestellt, daß diese den Schwenkausleger 55 und den Schwenkarm 35 mit einer im wesentlichen gleichbleibenden Federkraft beaufschlagt. Auf diese Weise wird eine annähernd konstante Andruckkraft der Waschbürste 39 während des gesamten Waschvorgangs gewährleistet.

Wie aus Figur 1 deutlich wird, steht der Bürstenwascheinrichtung 24 in Fahrtrichtung 13 geringfügig versetzt die Bürstenwascheinrichtung 26 gegenüber. Diese ist im wesentlichen identisch ausgebildet wie die Bürstenwascheinrichtung 24. Die Waschbürste der Bürstenwascheinrichtung 26 nimmt allerdings zu Beginn des Waschvorgangs die in Figur 1 in durchgezogener Linie dargestellte Seitenposition ein. Wie insbesondere aus Figur 6 deutlich wird, legt sich die Waschbürste der Bürstenwascheinrichtung 26 an die der Seitenfläche 62 des Fahrzeugs 60 gegenüberliegende Seitenfläche 63 an. Dies erfolgt durch Aktivierung des Stellmotors der Bürstenwascheinrichtung 26, der solange aktiviert bleibt bis die Leistungsaufnahme des Antriebsmotors der Waschbürste einen vorgegebenen Wert überschreitet. Sodann wird der Stellmotor der Bürstenwascheinrichtung 26 ausgeschaltet und die Waschbürste drückt mit einer gleichbleibenden Andruckkraft gegen die Seitenfläche 63 des Fahrzeugs 60. Erreicht die Heckfläche 64 des Fahrzeugs 60 die Waschbürste der Bürstenwascheinrichtung 26, so schwenkt diese aufgrund der von der Druckfeder der Bürstenwascheinrichtung 26 ausgeübten Federkraft in Richtung auf die Fahrbahnmitte 49. Das weitere Vorfahren des Fahrzeugs 60 hat zur Folge, daß sich die Andruckkraft der Waschbürste reduziert, so daß sich die Leistungsaufnahme des Antriebsmotors der Waschbürste der Bürstenwascheinrichtung 26 verringert. Unterschreitet die Leistungsaufnahme einen vorgegebenen Wert, so wird mit Hilfe der Leistungsüberwachungsschaltung der Stellmotor derart aktiviert, daß die Federhalterung in Richtung auf den Schwenkausleger verschwenkt wird und dadurch die Belastung der Druckfeder erhöht wird. Auf diese Weise wird sichergestellt, daß auch bei der Reinigung der Heckfläche 64 des Fahrzeugs 60 die Waschbürste mit einer annähernd gleichbleibenden Andruckkraft gegen die Heckfläche 64 gedrückt wird.

Durch die in Abhängigkeit von der Leistungsaufnahme des Antriebsmotors der Waschbürste erfolgende Nachführung der Druckfeder wird somit insgesamt eine optimale Andruckkraft der Waschbürste während des gesamten Waschvorgangs gewährleistet.

Den Bürstenwascheinrichtungen 24 bis 27 vorgeschaltet ist der Vorsprühbogen 29. Mit dessen Hilfe kann das zu reinigende Fahrzeug 60 zu Beginn der Reinigung mit einem Reinigungsmittel besprüht werden.

Den Bürstenwascheinrichtungen 24 bis 27 nachgeschaltet ist der Nachspülbogen 30, mit dessen Hilfe Reinigungsmittelrückstände vom Fahrzeug 60 abgespült werden können. Dem Nachspülbogen 30 wird Wasser zugeführt, dem ein Trocknungshilfsmittel zugesetzt wurde, um ein fleckenfreies Abtrocknen zu gewährleisten.

Wie insbesondere aus Figur 1 deutlich wird, sind der obere und der untere Schwenkarm 35 bzw. 36 in Fahrtrichtung 13 abgewinkelt, so daß eine Berührung des Fahrzeugs 60 durch die Schwenkarme 35 bzw. 36 ausgeschlossen ist.

Die Bewässerung der Waschbürste 39 erfolgt mittels an sich bekannter und deshalb in der Zeichnung nicht dargestellter Düsen, die am oberen und/oder am unteren Schwenkarm 35 bzw. 36 gehalten sind.

Wie ebenfalls aus Figur 1 deutlich wird, ist den beiden Bürstenwascheinrichtungen 24 und 26 ein zweites Waschbürstenpaar mit den Bürstenwascheinrichtungen 25 und 27 nachgeschaltet, die im wesentlichen identisch aufgebaut sind wie die Bürstenwascheinrichtungen 24 und 26. Allerdings sind bei dem genannten zweiten Waschbürstenpaar die Bürstenwascheinrichtungen zur Reinigung der Frontfläche und der Heckfläche des Fahrzeugs 60 spiegelverkehrt zu den entsprechenden Einrichtungen des ersten Waschbürstenpaars angeordnet.

Durch die Ausgestaltung der Fahrzeugwaschanlage 10 mit insgesamt vier Bürstenwascheinrichtungen wird eine doppelte Reinigung der beiden Seitenflächen des Fahrzeugs 60 erzielt, während Front- und Heckflächen nur einfach gereinigt werden, da die Schwenkarme der Bürstenwascheinrichtungen Jeweils nur bis zur Mitte 49 der Fahrbahn 12 reichen und somit jede Waschbürste nur eine Hälfte der Front- oder Heckfläche reinigt.

## Patentansprüche

1. Bürstenwascheinrichtung für Kraftfahrzeuge mit einem ortsfesten Gestell mit einem um eine vertikale Achse drehbar gelagerten Schwenkarm, an dem um eine vertikale Achse drehbar eine Waschbürste gehalten ist, und mit einem Federelement zum Andrücken der Waschbürste an ein an dem Gestell längs einer Fahrbahn vorbeifahrendes Kraftfahrzeug, dadurch gekennzeichnet, daß die Bürstenwascheinrichtung (24) eine die Andruckkraft des Federelements (54) regelnde Regeleinheit umfaßt.

2. Bürstenwascheinrichtung nach Anspruch 1, dadurch gekennzeichnet, daß die Regeleinheit ein mittels eines Führungsantriebs (47) relativ zur Waschbürste (39) bewegbares Führungsteil (51) umfaßt, an dem das Federelement (54) gehalten ist, das die Waschbürste (39) mit einer Federkraft beaufschlagt.

3. Bürstenwascheinrichtung nach Anspruch 2, dadurch gekennzeichnet, daß das Führungsteil eine um eine vertikale Achse schwenkbar am Gestell (14) gehaltene Federhalterung (51) umfaßt.

4. Bürstenwascheinrichtung nach Anspruch 3, dadurch gekennzeichnet, daß die Federhalterung (51) drehfest an einer vertikalen, dem Führungsantrieb (47) zugeordneten Antriebswelle (46) gehalten ist.

5. Bürstenwascheinrichtung nach Anspruch 2, 3 oder 4, dadurch gekennzeichnet, daß der Führungsantrieb (47) in Abhängigkeit von der vom Federelement (54) auf die Waschbürste (39) ausgeübten Federkraft aktivierbar ist.

6. Bürstenwascheinrichtung nach einem der Ansprüche 2 bis 5, dadurch gekennzeichnet, daß der Führungsantrieb (47) in Abhängigkeit von der Länge des Federwegs des Federelements (54) aktivierbar ist.

7. Bürstenwascheinrichtung nach Anspruch 6, dadurch gekennzeichnet, daß der Federweg des Federelements (54) durch einen Näherungsschalter begrenzt ist.

8. Bürstenwascheinrichtung nach einem der Ansprüche 2 bis 7, dadurch gekennzeichnet, daß der Führungsantrieb (47) in Abhängigkeit von der Leistungsaufnahme eines die Waschbürste (39) antreibenden Antriebsmotors (40) aktivierbar ist.

9. Bürstenwascheinrichtung nach einem der Ansprüche 2 bis 8, dadurch gekennzeichnet, daß der Führungsantrieb einen Stellmotor (47) umfaßt.

10. Bürstenwascheinrichtung nach einem der Ansprüche 2 bis 8, dadurch gekennzeichnet, daß der Führungsantrieb (47) ein hydraulisches oder pneumatisches Kolben-Zylinder-Aggregat umfaßt.

11. Bürstenwascheinrichtung nach einem der voranstehenden Ansprüche, dadurch gekennzeichnet, daß das Federelement (54) den Schwenkarm (35) mit einer Federkraft beaufschlagt.

12. Bürstenwascheinrichtung nach einem der Ansprüche 2 bis 11, dadurch gekennzeichnet, daß das Federelement (54) zwischen einem starr mit dem Schwenkarm (35) verbundenen Schwenkausleger (55) und dem Führungsteil (51) angeordnet ist.

13. Fahrzeugwaschanlage mit mindestens einem Paar Bürstenwascheinrichtungen (24, 26; 25, 27) nach einem der voranstehenden Ansprüche, dadurch gekennzeichnet, daß einer an einer Fahrbahnseite angeordneten ersten Bürstenwascheinrichtung (24; 27), deren Waschbürste (39) aus einer Frontposition mit im wesentlichen quer zur Fahrbahn (12) ausgerichtetem Schwenkarm (35) in eine Seitenposition mit im wesentlichen parallel zur Fahrbahn (12) ausgerichtetem Schwenkarm (35) verschwenkbar ist, eine an der gegenüberliegenden Fahrbahnseite angeordnete, zweite Bürstenwascheinrichtung (26; 25) zugeordnet ist, deren Waschbürste aus einer Seitenposition mit im wesentlichen parallel zur Fahrbahn ausgerichtetem Schwenkarm in eine Heckposition mit im wesentlichem quer zur Fahrbahn ausgerichtetem Schwenkarm verschwenkbar ist.

14. Fahrzeugwaschanlage nach Anspruch 13, dadurch gekennzeichnet, daß in Fahrtrichtung (13) hintereinander zwei spiegelbildlich ausgebildete Paare von Bürstenwascheinrichtungen (24, 26; 25, 27) angeordnet sind, deren Schwenkarme Jeweils mindestens bis zur Fahrbahnmitte (49) reichen.
